# FASCICULE DE BREVET EUROPEEN

(11) **EP 2 016 596 B1**
(45) Date de publication et mention de la délivrance du brevet: **19.10.2016**
(21) Numéro de dépôt: 07728779.5
(22) Date de dépôt: 04.05.2007
(51) Int. Cl.: C04B 35/453, C04B 35/457, C04B 35/46, C04B 35/47, H01C 7/108, H01C 7/112

(54) **UTILISATION DE B2O3 DANS UNE CERAMIQUE SEMICONDUCTRICE A BASE D'OXYDE D'ETAIN POUR EN DIMINUER LE COURANT DE FUITE ET EVENTUELLEMENT POUR EN STABILISER LES PROPRIETES ELECTRIQUES**
VERWENDUNG VON B2O3 IN EINER HALBLEITENDEN KERAMIK AUF DER BASIS VON ZINNOXID ZUR VERRINGERUNG DES LECKSTROMS UND ZUR STABILISIERUNG DER ELEKTRISCHEN EIGENSCHAFTEN
USE OF B203 IN A TIN OXIDE-BASED SEMI CONDUCTIVE CERAMIC FOR REDUCING THE LEAKAGE CURRENT THEREOF AND FOR POSSIBLY STABILIZING THE ELECTRICAL PROPERTIES THEREOF

(30) Priorité: 05.05.2006 FR 0651640
(43) Date de publication de la demande: 21.01.2009
(73) Titulaire: Schneider Electric Energy France, 92500 Rueil-Malmaison (FR)
(72) Inventeur: HASSANZADEH, Mehrdad, F-34830 Clapiers (FR); PUYANE, Ramon, F-34000 Montpellier (FR); MOREL, Jonathan, F-65000 Tarbes (FR); METZ, Renaud, F-69100 Villeurbanne (FR)
(74) Mandataire: Ilgart, Jean-Christophe
(86) Numéro de dépôt international: PCT/EP2007/054326
(87) Numéro de publication internationale: WO 2007/128785

(56) Documents cités:
- GB-A- 2 221 361
- JP-A- 4 048 703
- JP-A- 4 254 464
- JP-A- 5 129 106
- JP-A- 54 089 297
- JP-A- 2001 155 908
- JP-A- 2003 109 807
- US-A- 4 996 510

## Description

### DOMAINE TECHNIQUE

L'invention concerne l'utilisation de l'oxyde de bore B₂O₃ dans des céramiques semiconductrices à base d'oxyde d'étain, c'est-à-dire constituée par de l'oxyde d'étain SnO₂ en tant qu'oxyde de métal de base, pour en diminuer le courant de fuite et éventuellement pour en stabiliser les propriétés électriques.

L'invention concerne plus particulièrement l'utilisation de l'oxyde de bore B₂O₃ dans une céramique semiconductrice constituée par de l'oxyde d'étain en tant qu'oxyde de métal de base pour stabiliser les propriétés électriques et diminuer le courant de fuite de ladite céramique.

Le domaine technique de l'invention peut, de manière générale, être défini comme celui des céramiques semiconductrices constituées d'oxydes de métaux, plus précisément des céramiques semiconductrices constituées d'un oxyde de métal de base qui est l'oxyde d'étain SnO₂, et d'un ou plusieurs oxydes de métaux dopants.

De telles céramiques semiconductrices, qu'elles soient massives ou bien sous la forme de couches minces, sont utilisées en particulier pour fabriquer des résistances non linéaires en fonction de la tension, et notamment des varistances ou varistors qui sont utilisés par exemple dans les parafoudres à basse, moyenne et haute tension ou des éléments limiteurs de tension associés par exemple à un appareillage électrique ou électronique.

Des résistances non linéaires en fonction de la tension, telles que des varistances, à base de carbure de silicium, des redresseurs au sélénium et des diodes à jonction p-n en silicium ou en germanium ont été largement utilisées pour la stabilisation de tension de circuits électriques ou la suppression de surtensions anormalement élevées, induites dans des circuits électriques.

Les caractéristiques électriques d'une telle résistance non linéaire sont notamment :
- le coefficient de non-linéarité α ; plus α est élevé plus le matériau est performant ;
- le champ électrique admissible maximum avant disruption du champ de seuil Eₛ (en V/mm) ; plus il est élevé plus le matériau est performant. Ce champ Eₛ correspond à une tension avant disruption Vₛ ;
- le courant de fuite If (en A).

A l'heure actuelle, l'essentiel des résistances non linéaires est constitué par des masses frittées d'oxyde de zinc ZnO comprenant éventuellement un ou plusieurs additifs ou dopants choisis par exemple parmi les oxydes de métaux tels que Bi₂O₃, Sb₂O₃ ou Co₃O₄, mais le dioxyde d'étain SnO₂ qui trouvait des applications industrielles dans le domaine des éléments chauffants (par exemple les électrodes dans les fours à verre), des résistances électriques (couches minces polycristallines) dans la production des transistors, des revêtements antistatiques transparents (dépôts sur plaque de verre), est de plus en plus utilisé comme oxyde de métal de base des varistances pour parafoudre moyenne et haute tension. En effet, le SnO₂ présente des couples coefficient de non linéarité/champ de seuil qui sont comparables voire supérieurs au monoxyde de zinc.

Il a été constaté que les valeurs du courant de fuite des varistances existantes, en particulier des varistances dont l'oxyde de métal de base est le SnO₂, étaient encore beaucoup trop élevées par exemple de 0,5 à quelques µA pour une varistance de 10 mm de diamètre. Une valeur élevée du courant de fuite a comme conséquence directe une consommation d'énergie électrique en permanence, et des échauffements des résistances conduisant à un accroissement du courant de fuite avec possibilité d'emballement thermique.

Il existe donc un besoin pour des céramiques semiconductrices comprenant de l'oxyde d'étain SnO₂ en tant qu'oxyde de métal de base, et au moins un oxyde de métal dopant, qui présentent un courant de fuite plus faible.

En outre, pour que ces varistances soient industrialisables, il faut qu'elles soient stables dans le temps. Or, certaines des céramiques semiconductrices connues mises en oeuvre comme varistances et notamment celles à base de SnO₂ ne sont pas stables dans le temps notamment quant à leurs propriétés électriques qui présentent une dérive au cours du temps.

La dérive des propriétés électriques s'apprécie, pour une température donnée, par l'évolution du courant de fuite dans le temps à la moitié de la tension de seuil (correspondant au champ de seuil Eₛ). On définit aussi I_{fo} qui représente la première mesure de l'intensité du courant de fuite mesurée au temps initial t=0, et I_{ft} qui représente l'intensité mesurée au temps t postérieur, à température constante.

Certaines céramiques semiconductrices telles que celles dont l'oxyde de métal de base est le SnO₂ présentent ainsi une dérive croissante à savoir une augmentation du courant de fuite dans le temps qui dénote ainsi, plus généralement, la dérive et l'instabilité de leurs propriétés électriques dans le temps sous contraintes thermiques et électriques.

Il existe donc un besoin pour améliorer la stabilité dans le temps sous contraintes thermique et électrique des céramiques semiconductrices à base de dioxyde d'étain SnO₂.

Il existe en particulier un besoin pour stabiliser dans le temps les propriétés électriques de ces céramiques semiconductrices à base de SnO₂, diminuer la dérive de ces propriétés, et notamment diminuer la dérive du courant de fuite dans le temps.

Un premier but de la présente invention est de répondre au besoin de diminuer le courant de fuite des céramiques semiconductrices à base de dioxyde d'étain SnO₂.

Ce but est atteint, conformément à l'invention, en utilisant l'oxyde de bore B₂O₃ dans une céramique semiconductrice comprenant de l'oxydee d'étain SnO₂ en tant qu'oxyde de métal de base et au moins un oxyde de métal dopant, pour diminuer le courant de fuite de ladite céramique semiconductrice.

La céramique (avant addition de B₂O₃) est de préférence constituée par de l'oxyde d'étain SnO₂ en tant qu'oxyde de métal de base et par au moins un oxyde de métal dopant.

Il a été constaté de manière totalement étonnante que l'incorporation du B₂O₃ dans une céramique semiconductrice constituée par de l'oxyde d'étain SnO₂ en tan qu'oxyde de métal de base, et au moins un oxyde de métal dopant, conduisait à une diminution, à un abaissement du courant de fuite de ladite céramique semiconductrice.

Ainsi, la valeur du courant de fuite I_{fo} passe-t-elle par exemple, pour les varistances à base de SnO₂, d'une valeur de 3 x 10⁻⁸ A sans addition de B₂O₃ à une valeur de 3 x 10⁻⁹ A avec addition de B₂O₃. L'incorporation du B₂O₃ dans des céramiques semiconductrices pour des varistances est connue dans le cas où l'oxyde de métal de base est ZnO.

Cependant, l'incorporation de B₂O₃ dans les céramiques à base de SnO₂ n'est pas connue.

Ainsi, le document JP-A-89-0277646 décrit-il des varistances dont l'oxyde de base est le ZnO et qui comprennent ZnO : 80 à 97,5 mole % ; Bi₂O₃ : 0,3-3,0 mole % ; Sb₂O₃ : 0,3-3 mole % ; CoO : 0,3-3,0 mole % ; MgO : 1,0-5,0 mole % ; MnO : 0,3-3,0 mole % ; et NiO : 0,3-3,0 mole %, 0,01 à 1% en poids de B₂O₃ et 0,002 à 0,008 % en poids de Al₂O₃.

Cette composition permet d'obtenir des varistances qui ont une excellente capacité de decharge des surtensions, un coefficient non linéaire de tension supérieur, et de meilleurs caractéristiques de vie en charge (à savoir une stabilité dans le temps du courant de fuite). Toutefois, aucun effet particulier, intrinsèquement lié à B₂O₃, n'est mentionné dans ce document.

Le document JP-A-89-0254696 décrit des varistances présentant une non linéarité de tension améliorée qui sont préparées en ajoutant du Pr₆O₁₁, Co₃O₄, K₂O, Cr₂O₂, MgO, C₂O, Al₂O₃ et B₂O₃ dans des pourcentages respectifs de 0,5 ; 2,0 ; 0,1 ; 0,1 ; 0,1 ; 0,01 mole % à du ZnO. Du PbO est en outre ajouté dans une proportion de 0,3 à 200 mol/ppm.

De nouveau, aucun effet particulier intrinsèquement lié à B₂O₃ n'est mentionné dans ce document.

Le document JP-A-54-089297 indique que le taux de croissance du courant de fuite dans le temps par rapport à l'état initial, c'est-à-dire la dérive du courant de fuite pour une tension appliquée normale peut être diminué considérablement en ajoutant des microquantités de B₂O₃ et dé WO₃ dans des varistances à base de ZnO.

∘ Précisons que le terme "dérive" est ici à comprendre comme la variation par rapport à un état initial (à t=0), et non comme une dérivée mathématique.

Ainsi, dans ce document, on ajoute 0,002 à 0,5 mole % de B₂O₃ et de WO₃ à une composition contenant du ZnO et de 0,1 à 3% de Bi₂O₃ ; de 0,05 à 3% de Co₂O₃, de 0,05 à 3% de MnO₂, de 0,1 à 5% de Sb₂O₃, de 0,02 à 3% de Cr₂O₃, de 0,05 à 5% de SiO₂ et de 0,1 à 5% de NiO. Ce document ne divulgue pas qu'un quelconque effet de diminution du courant de fuite puisse être obtenu du fait de l'addition de B₂O₃.

En outre, ce document ne concerne que les varistances à base de ZnO et les enseignements relatifs aux varistances à base de cet oxyde ne peuvent en aucun cas être transposés aux varistances à base de SnO₂ (comme cela est expliqué plus loin).

JP 05129106 A décrit céramiques semiconductrices comprenant ZnO et SnO₂ en tant qu'oxyde de métal de base.

Selon l'invention, définie par les revendications 1 et 15, l'effet de diminution du courant de fuite peut être observé, dans les céramiques dont l'oxyde de métal de base est le SnO₂, même pour des quantités très faibles de B₂O₃ dans la céramique ; de préférence, la céramique semiconductrice comprend de 0,001 à 0,30% en masse, de préférence encore de 0,08 à 0,15 en masse de B₂O₃.

L'oxyde de métal dopant peut être tout oxyde de métal dopant connu de l'homme du métier dans le domaine des céramiques semiconductrices.

La céramique contient généralement en tant qu'oxyde(s) de métal (métaux) dopant(s) un ou plusieurs oxyde(s) choisi(s) parmi les oxydes de cobalt ; manganèse ; niobium ; métaux de transition, tels que le zinc si l'oxyde de métal de base n'est pas l'oxyde de zinc ; tantale ; métaux de la famille des lanthanides.

De préférence, le ou les oxyde(s) de métal (métaux) dopant(s) sont choisis parmi les oxydes de cobalt, manganèse, niobium, chrome et tantale.

De préférence encore, la céramique contient en tant qu'oxydes de métal (métaux) dopant(s) simultanément, à la fois, de l'oxyde de cobalt, de l'oxyde de manganèse, de l'oxyde de niobium et de l'oxyde de tantale.

Les proportions massiques de l'oxyde de métal de base SnO₂, du ou des oxydes de métaux dopants et du B₂O₃, sont telles que la céramique comprenne une proportion d'oxyde de métal de base SnO₂ supérieure ou égale à 90% en masse, de préférence supérieure ou égale à 95% en masse, de préférence encore supérieure ou égale à 99% en masse.

Le pourcentage d'oxyde de métal de base SnO₂ dans la céramique étant respecté, la proportion du ou des métaux dopants dans la céramique est telle que la céramique comprenne en complément à l'oxyde de métal de base SnO₂ et au B₂O₃, pour atteindre 100%, un ou plusieurs parmi les oxydes suivants dans les proportions en masse suivantes :
- 0,1 à 3% d'oxyde de cobalt,
- 0,01 à 3% d'oxyde de chrome,
- 0,01 à 3% d'oxyde de manganèse,
- 0,01 à 0,5% d'oxyde de niobium,
- 0,01% à 0,5% d'oxyde de tantale,
- 0,01 à 0,5% d'un ou plusieurs oxydes de métal de transition,
- 0,01 à 0,5% d'un ou plusieurs oxydes de métal de la famille des lanthanides tel que l'oxyde de lanthane.

L'invention concerne en outre l'utilisation de B₂O₃ dans une céramique semiconductrice comprenant de l'oxyde d'étain, en tant qu'oxyde de métal de base, et au moins un oxyde de métal dopant pour stabiliser les propriétés électriques et diminuer le courant de fuite de ladite céramique.

La céramique est de préférence constituée par de l'oxyde d'étain SnO₂ en tant qu'oxyde de métal de base et par au moins un oxyde de métal dopant.

Il a été mis en évidence de manière totalement surprenante, inattendue, selon l'invention, que l'addition de B₂O₃ dans une céramique semiconductrice à base d'oxyde d'étain SnO₂, c'est-à-dire comprenant en tant que métal de base du SnO₂, conduisait non seulement à une diminution du courant de fuite de ladite céramique, généralement dans les proportions déjà mentionnées plus haut, mais aussi à une stabilisation dans le temps des propriétés électriques de cette céramique semiconductrice sous contraintes thermique et électrique.

Cette stabilisation des propriétés électriques dans le temps, est notamment dénotée par une diminution notable du courant de fuite dans les premières minutes, par exemple dans les premières 2-3 minutes, sous tension constante et température ambiante, puis par une stabilisation de ce courant de fuite à une valeur très faible (cette stabilisation est observée aussi dans le cas où l'on effectue une mise sous tension à température élevée (correspondant au vieillissement accéléré)) ; alors que ces céramiques à base de SnO₂ présentent, en l'absence de B₂O₃ une augmentation du courant de fuite dans le temps pendant plusieurs minutes par rapport à I_{f0} (voir figures).

Précisons que la stabilisation est une stabilisation du courant de fuite dans le temps, c'est-à-dire en vieillissement sous tension de service.

Généralement, ce vieillissement est représenté par des essais normatifs de vieillissement accélérés (Cf Norme CEI 60099-4), qui peuvent aller jusqu'à 1000 heures sous tension et sous une température par exemple de 115°C ou 130°C, représentant 30 ans de service.

Donc, dans le cas de céramiques à base de SnO₂ un double effet, lié fondamentalement à la présence de B₂O₃ est obtenu : à savoir l'obtention d'un courant de fuite plus faible, mais aussi une stabilisation très rapide des propriétés électriques de la céramique au cours du temps, ce qui permet un test de validation en usine très rapide sur les varistances produites.

A titre indicatif, un dispositif actuel de test en fabrication a rejeté tous les échantillons de SnO₂ sans bore, car instables dans la fenêtre de mesure.

Par exemple, il a pu être montré que l'accroissement de courant de fuite atteint +200% en quelques minutes en l'absence de B₂O₃, et qu'à l'inverse, ce courant de fuite est réduit de quelques dizaines de pourcent, par exemple jusqu'à jusqu'à -90% (cf figures), lorsque la même céramique contient de l'oxyde de bore.

Encore, un autre effet inattendu causé par l'addition de B₂O₃ dans une céramique dont l'oxyde de métal de base est le SnO₂ est l'amélioration, l'augmentation de valeur de non linéarité α.

Par exemple, il a pu être montré que α qui a une valeur moyenne de 23, pour une céramique à base de SnO₂, sans addition de B₂O₃, pouvait s'élever jusqu'à une valeur moyenne de 42 pour la même céramique à base de SnO₂ mais à laquelle est ajouté du B₂O₃.

L'effet de stabilisation des propriétés électriques dans le temps, et en particulier l'effet de stabilisation du courant de fuite dans le temps par addition de B₂O₃ dans les céramiques semiconductrices est connu pour les céramiques à base de ZnO.

Il n'existe aucune mention dans l'art antérieur de l'incorporation de B₂O₃ dans des céramiques semiconductrices à base d'oxyde d'étain (SnO₂) et il n'existe aucune mention ni aucune suggestion dans l'art antérieur qu'un effet de stabilisation des propriétés électriques dans le temps, et en particulier du courant de fuite puisse être obtenu, dans les céramiques à base du SnO₂, en y incorporant du B₂O₃.

Rien ne pouvait laisser prévoir qu'un effet de stabilisation des propriétés électriques dans le temps, et en particulier du courant de fuite déjà observé pour les céramiques semiconductrices à base de ZnO, pourrait être obtenu aussi avec les céramiques semiconductrices à base d'oxyde d'étain (SnO₂).

En effet, les enseignements que l'on peut déduire des effets de stabilisation obtenus par la mise en oeuvre de B₂O₃ dans de l'oxyde de zinc (ZnO) ne peuvent en aucun cas être appliqués au dioxyde d'étain (SnO₂) car des différences très importantes de comportement existent entre ces oxydes, ce qui rend en fait totalement imprévisible et aléatoire le passage d'un oxyde à l'autre ; l'oxyde de zinc présente par exemple un rapport métal/oxygène de 1 alors que pour l'étain ce rapport est égal à 2.

En outre, on sait que les mécanismes de réduction pour le SnO₂ sont fondamentalement différents de ceux du ZnO.

Le fait que des effets avantageux de stabilisation aient été obtenus par addition de B₂O₃ dans des céramiques à base d'oxyde de zinc, ne signifiait en rien que de tels effets pourraient être obtenus avec des céramiques à base d'oxyde d'étain.

En d'autres termes, tous les effets de stabilisation obtenus avec le B₂O₃ dans une céramique au SnO₂ étaient imprévisibles et absolument incertains, car l'homme du métier sait que la chimie de l'étain est bien différente de celle du zinc.

L'effet de stabilisation des propriétés électriques dans les céramiques à base de SnO₂ peut être observé même pour des quantités très faibles de B₂O₃ dans la céramique.

De préférence, la céramique semiconductrice comprend de 0,001 à 0,30% en masse, de préférence encore de 0,08 à 0,15%, en masse de B₂O₃. On observe ainsi l'effet de stabilisation et l'effet de diminution du courant de fuite déjà mentionné plus haut.

La céramique contient généralement en tant qu'oxyde(s) de métal (métaux) dopant(s) un ou plusieurs oxyde(s) choisi(s) parmi les oxydes de cobalt ; manganèse ; niobium ; métaux de transition, tels que le zinc si l'oxyde de métal de base n'est pas l'oxyde de zinc ; tantale ; métaux de la famille des lanthanides.

De préférence, le ou les oxydes de métal (métaux) dopant(s) est (sont) choisi(s) parmi les oxydes de cobalt ; niobium, chrome et tantale.

De préférence encore, la céramique contient en tant qu'oxydes de métaux dopants, simultanément, à la fois, de l'oxyde de cobalt, de l'oxyde de niobium, de l'oxyde de chrome et de l'oxyde de tantale.

Les proportions massiques de l'oxyde d'étain, du ou des oxydes de métaux dopants et du B₂O₃, sont telles que la céramique comprenne une proportion d'oxyde (s) de métal de base supérieure ou égale à 90% en masse, de préférence supérieure ou égale à 95% en masse, de préférence encore supérieure ou égale à 99% en masse.

Le pourcentage d'oxyde d'étain de base étant respecté dans la céramique, la proportion du ou des métaux dopants dans la céramique est telle que la céramique comprenne en complément à l'oxyde d'étain et au B₂O₃, pour atteindre 100%, un ou plusieurs parmi les oxydes suivants dans les proportions en masse suivantes :
- 0,1 à 3% d'oxyde de cobalt,
- 0,01 à 3% d'oxyde de chrome,
- 0,01 à 3% d'oxyde de manganèse,
- 0,01 à 0,5% d'oxyde de niobium,
- 0,01% à 0,5% d'oxyde de tantale,
- 0,01 à 0,5% d'un ou plusieurs oxydes de métal de transition,
- 0,01 à 0,5% d'un ou plusieurs oxydes de métal de la famille des lanthanides tel que l'oxyde de lanthane.

L'incorporation de B₂O₃ dans une céramique dont l'oxyde de métal de base est le SnO₂ est nouvelle et procure les effets inattendus mentionnés ci-dessus.

En conséquence, l'invention concerne également une céramique semiconductrice comprenant de l'oxyde d'étain SnO₂ en tant qu'oxyde de métal de base, au moins un oxyde de métal dopant, et du B₂O₃.

Cette céramique à base d'oxyde d'étain est telle que déjà définie ci-dessus.

La céramique est de préférence constituée par de l'oxyde d'étain SnO₂ en tant qu'oxyde de métal de base, par au moins un oxyde de métal dopant et par du B₂O₃.

Les céramiques semiconductrices selon l'invention peuvent être préparées par tout procédé connu pour la préparation de telles céramiques. L'homme du métier peut facilement procéder aux légères adaptations de ces procédés nécessaires pour réaliser l'incorporation de B₂O₃.

Rappelons que les matériaux céramiques semiconducteurs pour les varistances ou pastilles céramiques semiconductrices utilisées pour la protection contre les surtensions sont généralement préparées à partir des oxydes qui les constituent, sous forme pulvérulente.

Ainsi, les matériaux céramiques semiconducteurs les plus largement utilisés actuellement, qui sont à base de ZnO, sont-ils préparés à partir d'oxydes pulvérulents constitués de l'oxyde majoritaire qui est ZnO et des oxydes dopants tels que les oxydes de nickel, chrome, manganèse, magnésium, bismuth, antimoine, silicium, cobalt, etc.

De manière générale, les procédés chimiques classiques de préparation des matériaux céramiques consistent donc à peser les oxydes constitutifs, à les mélanger et à les broyer, puis à constituer un mélange en milieu aqueux pour obtenir une barbotine.

Cette barbotine est atomisée et séchée (technique dite de « spray drying ») pour former des agglomérats de quelques centaines de microns qui sont ensuite mis en forme par pressage puis frittés à haute température.

Des électrodes métalliques sont enfin déposées, et l'élément est revêtu, sur ses autres surfaces, d'un matériau assurant l'isolation électrique ainsi que d'une protection physico-chimique et mécanique.

Une amélioration de ces procédés traditionnels de préparation de céramiques, notamment de céramiques semiconductrices pour varistances qui permet d'obtenir une poudre homogène au niveau moléculaire d'oxydes de métaux alliés, est le procédé dénommé « ODAP » ou « Oxydation Directe d'un Alliage Précurseur ».

Le procédé ODAP est décrit dans le document FR-A-2 674 157 et avec certaines variations par rapport au document FR-A-2 674 157, dans le document EP-A1-0 580 912, ainsi que dans le document US-A-5,322,642.

Dans le procédé ODAP, les éléments de base ou matières premières pour l'obtention de la poudre destinée à donner la céramique semiconductrice ne sont plus des oxydes de métaux mais des alliages ou mélanges de métaux qui sont seulement ensuite oxydés soit en phase solide, soit en phase liquide, soit en phase vapeur.

Tout autre procédé de préparation de céramiques semiconductrices notamment à base de SnO₂ peut être utilisé selon l'invention, qu'il s'agisse d'une variante, d'une amélioration, du procédé ODAP ou d'un procédé dérivé de celui-ci.

L'invention va maintenant être décrite en référence à la description qui suit, d'exemples de réalisation de celle-ci, donnés à titre illustratif et non limitatif en référence aux dessins joints, dans lesquels :
- la figure 1 présente des graphiques qui donnent la dérive du courant de fuite [((I_{f}-I_{fo})/I_{fo}] (en %), en fonction du temps t (en minutes), pour la céramique de l'exemple 1 ne contenant pas de B₂O₃ (A), et pour la même céramique contenant respectivement 0,07% en masse de B₂O₃ (B), 0,1% en masse de B₂O₃ (C) et 0,15% en masse de B₂O₃ (D) ;
- la figure 2 est un graphique qui donne la valeur du courant de fuite à t=0 (I_{fo} pour U=U_{s/2}) pour différents pourcentages massiques en B₂O₃ (voir Tableau 3) ;
- la figure 3 présente des graphiques qui donnent la dérive du courant de fuite [(I_{f}-I_{fo})/I_{fo}] (en %), en fonction du temps t (en minutes), pour une céramique ayant la composition donnée dans le tableau 1, Exemple 1, ne contenant pas de B₂O₃ (courbe du haut) et pour une céramique ayant la composition donnée dans le Tableau 2, ligne 2, contenant du B₂O₃ (courbe du bas) ;
- la figure 4 présente un graphique qui concerne les résultats d'un test de stabilité en vieillissement accéléré à 130°C de la céramique contenant du B₂O₃ ayant la composition donnée dans le tableau 2, ligne 2.

En ordonnée est portée l'intensité (en A) et en abscisse est porté le temps (en heures).

### Examples utiles à la compréhension de l'invention ;

### Exemple 1

On a préparé une céramique de référence sans B₂O₃ qui a la composition suivante donnée dans le Tableau 1 :

**Tableau 1**

| Composés | SnO₂ | CoO | Nb₂O₅ | Cr₂O₃ | B₂O₃ | Ta₂O₅ |
|---|---|---|---|---|---|---|
| % massique théorique | 98,5 | 0,5000 | 0,5000 | 0,2500 | / | 0,2500 |

La céramique est préparée par la voie classique de mélange et broyage des differents oxydes de la formulation, soit à sec ou dans une barbotine aqueuse ou non-aqueuse.

La barbotine est transformée en poudre céramique par un procédé de sechage traditionnel. La poudre céramique est mise en forme par pressage uniaxial dans un moule cylindrique. Les céramiques sont frittées dans un four électrique. Les céramiques déjà frittées sont métallisées sur leurs faces planes et leur surface cylindrique sont passivées diélectriquement.

On a ensuite préparé de la même manière des céramiques contenant différentes teneurs massiques en B₂O₃ : 0,07% en masse ; 0,1% en masse et 0,15% en masse. Les compositions de ces céramiques sont données dans le Tableau 2 ci-dessous.

**Tableau 2**

| Composés | SnO₂ | CoO | Nb₂O₅ | Cr₂O₃ | B₂O₃ | Ta₂O₅ |
|---|---|---|---|---|---|---|
| % massique théorique | 98,43 | 0,5000 | 0.5000 | 0,2500 | 0,07 | 0,2500 |
| - | 98,40 | 0.5000 | 0,5000 | 0,2500 | 0,10 | 0,2500 |
| - | 98,35 | 0,5000 | 0,5000 | 0,2500 | 0,15 | 0.2500 |

Pour chacune de ces céramiques, on apprécie à 25°C, l'évolution du courant de fuite dans le temps à la moitié de la tension de seuil Uₛ (correspondant au champ de seuil Eₛ). On définit ainsi I_{fo} qui représente l'intensité (en A) du courant de fuite mesurée au temps t=0 et I_{f} qui est l'intensité (en A) mesurée au temps t.

Le courant de fuite est mesuré avec un ampèremètre connecté en serie avec la varistance.

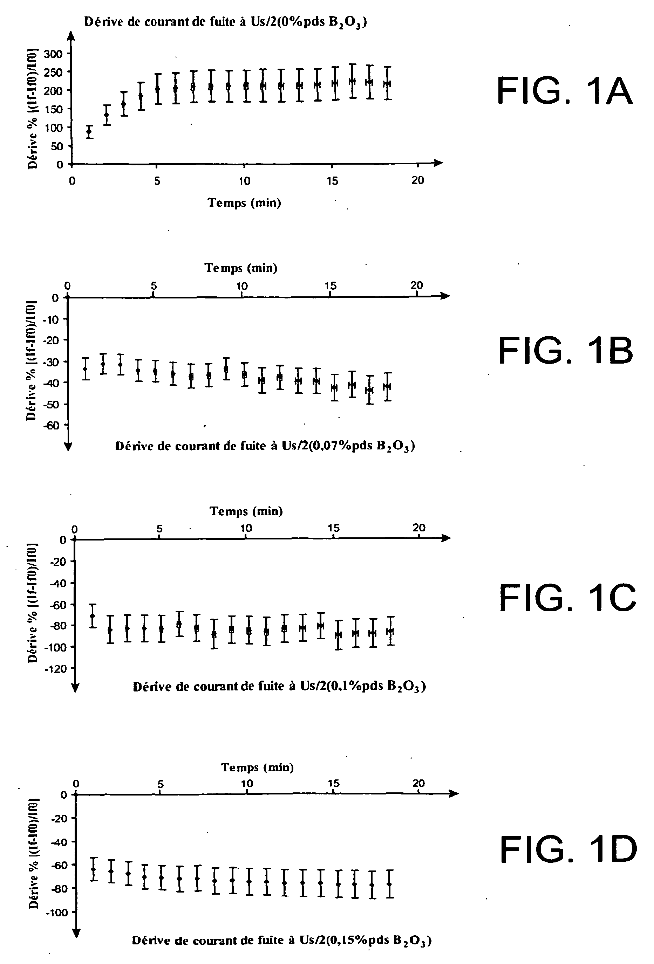

Les résultats des mesures effectuées sur les diverses céramiques avec ou sans B₂O₃ sont portés sur les graphiques de la figure 1 (A, B, C, D).

L'analyse des graphiques de cette figure montre que la dérive du courant de fuite à Uₛ/2 (Uₛ/2 étant respectivement de 670 V pour la figure 1A, 520 V pour la figure 1B, 550 V pour la figure 1C et 510 V pour la figure 1D) est très importante et atteint +200% en quelques minutes en l'absence de B₂O₃ et qu'à l'inverse elle décroît, elle est négative dès les premières minutes lorsque la céramique contient de l'oxyde de bore.

Les I_{fo} et I_{ffinal} (à 20 min) pour les 4 céramiques à 0 ; 0,07 ; 0,1 et 0,15% de B₂O₃ sont respectivement (en A) : 1.10⁻⁸ et 1.10⁻⁷ ; 7.10⁻⁹ et 4.10⁻⁹ ; 5.10⁻⁹ et 1.10⁻⁹ ; 1.10⁻⁸ et 5.10⁻⁹.

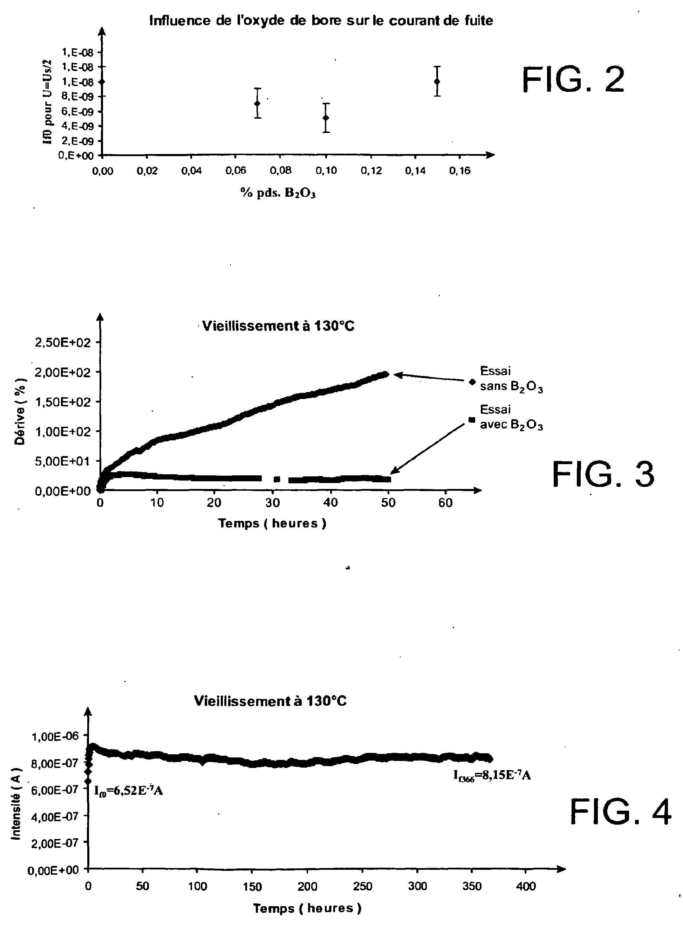

La figure 3 donne les courbes de vieillissement accéléré (dérive en % en fonction du temps (heures)) sur 55 heures à 130°C pour les céramiques ayant la formulation du Tableau 1 (sans B₂O₃ : courbe du haut) et du Tableau 2, ligne 2 (avec B₂O₃ : courbe du bas).

La figure 4 est un graphique qui concerne les résultats d'un test de stabilité en vieillissement accéléré de la céramique ayant la composition donnée dans le Tableau 2, ligne 2.

Le test de stabilité en vieillissement accéléré est réalisé à 130°C dans un milieu environnant qui est de l'air :
- Lᵥ = 1000 x 2^{(T/10)} avec T = 115-Tᵥ
- 130°C-Uₛ/2=500 V, et à 130°C Lᵥ = 353 h.

On note qu'à t = 0 I_{fo} = 6,52.10⁻⁷A et à t = 366 heures I_{f366} = 8,15.10⁻⁷A.

Le Tableau 3 suivant montre l'évolution des propriétés électriques des différentes céramiques préparées ci-dessus en fonction de la teneur en bore de B₂O₃.

**Tableau 3**

| | | | | |
|---|---|---|---|---|
| B₂O₃ (% massique) | 0% | 0,07% | 0,10% | 0,15% |
| α moyen (±15) | 92 | 66 | 73 | 46 |
| Es (V/mm) moyen (±25) | 890 | 740 | 746 | 675 |
| Ifₒ (A) | 1,00E-08 | 7,00E-09 | 5,00-09 | 1,00E-08 |
| Jfₒ (A.cm⁻²) | 2,00E-08 | 1,40E-08 | 1,00E-08 | 2,00E-08 |
| Uₛ/2 (V) | 670 | 520 | 550 | 510 |

Tableau 3 : évolution des propriétés électriques en fonction de la teneur en bore.

Dans le Tableau 3, rappelons que α est le coefficient de non linéarité ; Es est le champ de seuil, Ifₒ est l'intensité du courant de fuite à t=0 ; J_{fo} est la densité du courant de fuite à t=0 ; Uₛ/2 est la contrainte électrique pour la mesure du courant de fuite à 25°C.

On remarque sur ce tableau l'effet de diminution du courant de fuite à t=0 lié à l'incorporation du B₂O₃ dans la céramique.

On a reporté les résultats obtenus sur la figure 2, où I_{fo} est porté en fonction du pourcentage massique de B₂O₃. Le graphique met bien en évidence l'abaissement du courant de fuite à t=0 par addition d'oxyde de bore B₂O₃ à la formulation de céramique.

Il existe une teneur optimale (voisine de 0,10%) en B₂O₃ pour laquelle l'effet de diminution du courant de fuite à t=0 est le plus important et aussi la stabilité électrique.

### Exemple 2

On a préparé la composition de céramique suivante de la même manière que cela a été décrit ci-dessus dans l'exemple 1 sans addition de B₂O₃.

**Tableau 4**

| | | | | | | |
|---|---|---|---|---|---|---|
| Composés | SnO₂ | CoO | Nb₂O₅ | Cr₂O₃ | B₂O₃ | Ta₂O₅ |
| % massique théorique | 99,36 | 0,5 | 0,09 | 0,05 | / | 0,25 |

Les propriétés électriques de cette céramique sont les suivantes :

**Tableau 5**

| | |
|---|---|
| α moyen (±15) | 23 |
| Es (V/mm) moyen (±25) | 392 |
| Ifₒ moyen (A) | 6E-08 |

On a préparé ensuite, comme décrit plus haut, une céramique ayant une composition analogue à celle décrite ci-dessus mais dans laquelle on a ajouté 0,1 en masse de B₂O₃ :

**Tableau 6**

| | | | | | | |
|---|---|---|---|---|---|---|
| Composés | SnO₂ | CoO | Nb₂O₅ | Cr₂O₃ | B₂O₃ | Ta₂O₅ |
| % massique théorique | 99,26 | 0,5 | 0,09 | 0,05 | 0,1 | 0,25 |

Les propriétés électriques de cette céramique sont les suivantes :

**Tableau 7**

| | |
|---|---|
| α moyen (±15) | 42 |
| Es (V/mm) moyen (±25) | 394 |
| Ifₒ moyen (A) | 8E-09 |

L'oxyde de bore diminue le courant de fuite et améliore la valeur de α. Ces effets sont clairement liés à l'addition du B₂O₃.

## Revendications

1. Utilisation de B₂O₃ dans une céramique semiconductrice constituée par de l'oxyde d'étain SnO₂ en tant qu'oxyde de métal de base et par au moins un oxyde de métal dopant, pour diminuer le courant de fuite de ladite céramique semiconductrice.

2. Utilisation selon la revendication 1, dans laquelle la céramique semiconductrice comprend de 0,001 à 0,30% en masse, de préférence de 0,08 à 0,15% en masse, de B₂O₃.

3. Utilisation selon l'une quelconque des revendications précédentes, dans laquelle la céramique contient en tant qu'oxyde(s) de métaux dopants un ou plusieurs oxyde(s) choisi(s) parmi les oxydes de cobalt ; manganèse ; niobium ; métaux de transition, tels que le zinc ; tantale ; métaux de la famille des lanthanides.

4. Utilisation selon la revendication 3, dans laquelle le ou les oxyde(s) de métal(métaux) dopant(s) est(sont) choisi(s) parmi les oxydes de cobalt, manganèse, niobium, chrome et tantale.

5. Utilisation selon la revendication 4, dans laquelle la céramique contient en tant qu'oxydes de métaux dopants, de l'oxyde de cobalt, de l'oxyde de chrome, de l'oxyde de niobium et de l'oxyde de tantale.

6. Utilisation selon l'une quelconque des revendications précédentes, dans laquelle les proportions massiques de l'oxyde de métal de base SnO₂, du ou des oxydes de métaux dopants et du B₂O₃, sont telles que la céramique comprenne une proportion d'oxyde de métal de base SnO₂ supérieure ou égale à 90% en masse, de préférence supérieure ou égale à 95% en masse, de préférence encore supérieure ou égale à 99% en masse.

7. Utilisation selon la revendication 6, dans laquelle les proportions massiques de l'oxyde de métal de base SnO₂, et du ou des oxyde (s) de métaux dopants, sont telles qu'elles permettent d'obtenir une céramique comprenant en complément à l'oxyde de métal de base SnO₂ et au B₂O₃, pour atteindre 100%, un ou plusieurs parmi les oxydes suivants dans les proportions en masse suivantes :
• 0,1 à 3% d'oxyde de cobalt,
• 0,01 à 3% d'oxyde de chrome,
• 0,01 à 3% d'oxyde de manganèse,
• 0,01 à 0,5% d'oxyde de niobium,
• 0,01% à 0,5% d'oxyde de tantale,
• 0,01 à 0,5% d'un ou plusieurs oxydes de métal de transition,
• 0,01 à 0,5% d'un ou plusieurs oxydes de métal de la famille des lanthanides tel que l'oxyde de lanthane.

8. Utilisation de B₂O₃ dans une céramique semiconductrice constituée par de l'oxyde d'étain SnO₂, en tant qu'oxyde de métal de base, et par au moins un oxyde de métal dopant, selon la revendication 1 pour, en outre, stabiliser dans le temps les propriétés électriques sous contraintes thermique et électrique de ladite céramique.

9. Utilisation selon la revendication 8, dans laquelle la céramique semiconductrice comprend de 0,001 à 0,30% en masse, de préférence de 0,08 à 0,15% en masse, de B₂O₃.

10. Utilisation selon l'une quelconque des revendications 8 à 9, dans laquelle la céramique contient en tant qu'oxyde(s) de métaux dopants un ou plusieurs oxyde(s) choisi(s) parmi les oxydes de cobalt ; manganèse ; niobium ; métaux de transition, tels que le zinc ; tantale ; et métaux de la famille des lanthanides.

11. Utilisation selon la revendication 10, dans laquelle le ou les oxyde(s) de métal(métaux) dopant(s) est(sont) choisi(s) parmi les oxydes de cobalt, niobium, chrome, tantale et manganèse.

12. Utilisation selon l'une quelconque des revendications 8 à 11, dans laquelle la céramique contient en tant qu'oxydes de métaux dopants, de l'oxyde de cobalt, de l'oxyde de chrome, de l'oxyde de niobium et de l'oxyde de tantale.

13. Utilisation selon l'une quelconque des revendications 8 à 12, dans laquelle les proportions massiques de l'oxyde d'étain, du ou des oxydes de métaux dopants et du B₂O₃, sont telles que la céramique comprenne une proportion d'oxyde(s) d'étain supérieure ou égale à 90% en masse, de préférence supérieure ou égale à 95% en masse, de préférence encore supérieure ou égale à 99% en masse.

14. Utilisation selon la revendication 13, dans laquelle les proportions massiques de l'oxyde d'étain et du ou des oxyde(s) de métaux dopants, sont telles que la céramique comprenne en complément à l'oxyde d'étain et au B₂O₃, pour atteindre 100%, un ou plusieurs parmi les oxydes suivants dans les proportions en masse suivantes :
• 0,1 à 3% d'oxyde de cobalt,
• 0,01 à 3% d'oxyde de chrome,
• 0,01 à 3% d'oxyde de manganèse,
• 0,01 à 0,5% d'oxyde de niobium,
• 0,01% à 0,5% d'oxyde de tantale,
• 0,01 à 0,5% d'un ou plusieurs oxydes de métal de transition,
• 0,01 à 0,5% d'un ou plusieurs oxydes de métal de la famille des lanthanides tel que l'oxyde de lanthane.

15. Céramique semiconductrice constituée par de l'oxyde d'étain SnO₂ en tant qu'oxyde de métal de base, au moins un oxyde de métal dopant, et du B₂O₃.

16. Céramique semiconductrice selon la revendication 15, dans laquelle le B₂O₃ représente de 0,001 en 0,30% en masse, de préférence de 0,08 à 0,15 % en masse de la céramique.

17. Céramique selon l'une quelconque des revendications 15 à 16, dans laquelle la céramique contient en tant qu'oxyde(s) de métaux dopants un ou plusieurs oxyde(s) choisi(s) parmi les oxydes de cobalt ; manganèse ; niobium ; métaux de transition, tels que le zinc ; tantale ; métaux de la famille des lanthanides.

18. Céramique selon la revendication 17, dans laquelle le ou les oxyde(s) de métal(métaux) dopants est(sont) choisi(s) parmi les oxydes de cobalt, niobium, chrome, tantale et manganèse.

19. Céramique selon la revendication 18, dans laquelle la céramique contient en tant qu'oxydes de métaux dopants, de l'oxyde de cobalt, de l'oxyde de chrome, de l'oxyde de niobium et de l'oxyde de tantale.

20. Céramique selon l'une quelconque des revendications 15 à 19, dans laquelle les proportions massiques de l'oxyde d'étain, du ou des oxydes de métaux dopants et du B₂O₃, sont telles que la céramique comprenne une proportion d'oxyde(s) d'étain supérieure ou égale à 90% en masse, de préférence supérieure ou égale à 95% en masse, de préférence encore supérieure ou égale à 99% en masse.

21. Céramique selon la revendication 20, dans laquelle les proportions massiques de l'oxyde d'étain, du ou des oxyde(s) de métaux dopants, sont telles qu'elles permettent d'obtenir une céramique comprenant en complément à l'oxyde d'étain, et au B₂O₃, pour atteindre 100%, un ou plusieurs parmi les oxydes suivants dans les proportions en masse suivantes :
• 0,1 à 3% d'oxyde de cobalt,
• 0,01 à 3% d'oxyde de chrome,
• 0,01 à 3% d'oxyde de manganèse,
• 0,01 à 0,5% d'oxyde de niobium,
• 0,01% à 0,5% d'oxyde de tantale,
• 0,01 à 0,5% d'un ou plusieurs oxydes de métal de transition,
• 0,01 à 0,5% d'un ou plusieurs oxydes de métal de la famille des lanthanides tel que l'oxyde de lanthane.

## Patentansprüche

1. Verwendung von B₂O₃ in einer halbleitenden Keramik, gebildet durch Zinnoxid SnO₂ als Basismetalloxid und durch wenigstens ein dotierendes Metalloxid, um den Leckstrom der genannten halbleitenden Keramik zu verringern.

2. Verwendung nach Anspruch 1, bei der die halbleitende Keramik massebezogen 0,001 bis 0,30 %, vorzugsweise 0,08 bis 0,15 % B₂O₃ umfasst.

3. Verwendung nach einem der vorhergehenden Ansprüche, bei der die Keramik als Dotierungsmetalloxid(e) ein (oder mehrere) Oxid(e) umfasst, ausgewählt unter den Oxiden von Kobalt ; Mangan ; Niobium ; Übergangsmetallen wie zum Beispiel Zink, Tantal ; Metallen der Familie der Lanthanide.

4. Verwendung nach Anspruch 3, bei der das (oder die) Dotierungsmetalloxid(e) ausgewählt wird (werden) unter den Oxiden von Kobalt, Mangan, Niobium, Chrom und Tantal.

5. Verwendung nach Anspruch 4, bei der die Keramik als Dotierungsmetalloxid(e) Kobaltoxid, Chromoxid, Niobiumoxid und Tantaloxid enthält.

6. Verwendung nach einem der vorhergehenden Ansprüche, bei der die Massenanteile des Basismetalloxids SnO₂, des oder der Dotiermetalloxide und des B₂O₃ so sind, dass sie ermöglichen, dass die Keramik, massebezogen, einen Basismetalloxidanteil SnO₂ größer oder gleich 90 %, bevorzugter größer oder gleich 95 %, noch bevorzugter größer oder gleich 99 % umfasst.

7. Verwendung nach Anspruch 6, bei der die Massenanteile des Basismetalloxids SnO₂, und des oder der Dotiermetalloxide, so sind, dass sie ermöglichen, eine Keramik herzustellen, die als Ergänzung zu dem Basismetalloxid SnO₂ und zu B₂O₃, um 100 % zu erreichen, ein oder mehrere der nachfolgenden Oxide mit den folgenden Massenanteilen umfasst:
• 0,1 bis 3 % Kobaltoxid,
• 0,01 bis 3 % Chromoxid,
• 0,01 bis 3 % Manganoxid,
• 0,01 bis 0,5 % Niobiumoxid,
• 0,01 bis 0,5 % Tantaloxid,
• 0,01 bis 0,5 % von einem (oder mehreren) Übergangsmetalloxid(en),
• 0,01 bis 0,5 % von einem (oder mehreren) Metalloxid(en) aus der Familie der Lanthanide wie zum Beispiel Lanthanoxid.

8. Verwendung von B₂O₃ in einer halbleitenden Keramik, gebildet durch das Zinnoxid SnO₂, als Basismetalloxid, und durch wenigstens ein dotierendes Metalloxid, gemäß Anspruch 1, um außerdem bzw. zusätzlich die elektrischen Eigenschaften der genannten Keramik unter thermischen und elektrischen Spannungen zeitlich zu stabilisieren.

9. Verwendung nach Anspruch 8, bei der die halbleitende Keramik massebezogen 0,001 bis 0,30 %, vorzugweise 0,08 bis 0,15 % B₂O₃ umfasst.

10. Verwendung nach einem der Ansprüche 8 bis 9, bei der die Keramik als Dotier-metalloxid(e) ein (oder mehrere) Oxid(e) enthält, ausgewählt unter den Oxiden von Kobalt ; Mangan ; Niobium ; Übergangsmetallen wie zum Beispiel Zink ; Tantal ; und Metallen der Familie der Lanthanide.

11. Verwendung nach Anspruch 10, bei der das (oder die) Dotiermetalloxid(e) ausgewählt wird (werden) unter den Oxiden von Kobalt, Niobium, Chrom, Tantal und Mangan.

12. Verwendung nach einem der Ansprüche 8 bis 11, bei der die Keramik als Dotiermetalloxide das Kobaltoxid, das Chromoxid, das Niobiumoxid und das Tantaloxid enthält.

13. Verwendung nach einem der vorhergehenden Ansprüche 8 bis 12, bei der die Massenanteile des Zinnoxids, des oder der Dotiermetalloxide und des B₂O₃ so sind, dass sie ermöglichen, dass die Keramik einen Zinnoxid(e)anteil umfasst, der, massebezogen, größer oder gleich 90 %, bevorzugter größer oder gleich 95 %, noch bevorzugter größer oder gleich 99 % ist.

14. Verwendung nach Anspruch 13, bei der die Massenanteile des Zinnoxids und des oder der Dotiermetalloxide so sind, dass die Keramik zusätzlich zu dem Zinnoxid und zu dem B₂O₃, um 100 % zu erreichen, ein oder mehrere der nachfolgenden Oxide mit den folgenden Massenanteilen umfasst :
• 0,1 bis 3 % Kobaltoxid,
• 0,01 bis 3 % Chromoxid,
• 0,01 bis 3 % Manganoxid,
• 0,01 bis 0,5 % Niobiumoxid,
• 0,01 bis 0,5 % Tantaloxid,
• 0,01 bis 0,5 % von einem (oder mehreren) Übergangsmetalloxid(en),
• 0,01 bis 0,5 % von einem (oder mehreren) Metalloxid(en) aus der Familie der Lanthanide wie zum Beispiel Lanthanoxid.

15. Halbleitende Keramik, gebildet durch das Zinnoxid SnO₂ als Basismetalloxid, wenigstens ein Dotiermetalloxid, und B₂O₃.

16. Halbleitende Keramik nach Anspruch 15, bei der das B₂O₃ 0,001 bis 0,30 %, vorzugsweise 0,08 bis 0,15 % der Masse der Keramik ausmacht.

17. Keramik nach einem der Ansprüche 15 bis 16, wobei die Keramik als Dotier-metalloxid(e) ein (oder mehrere) Oxid(e) enthält, ausgewählt unter den Oxiden von Kobalt; Mangan ; Niobium ; Übergangsmetallen wie etwa Zink; Tantal ; Metallen der Familie der Lanthanide.

18. Keramik nach Anspruch 17, bei der das (oder die) Dotiermetalloxid(e) ausgewählt wird (werden) unter den Oxiden von Kobalt, Niobium, Chrom, Tantal und Mangan.

19. Keramik nach Anspruch 18, wobei die Keramik als Dotiermetalloxide Kobaltoxid, Chromoxid, Niobiumoxid und Tantaloxid enthält.

20. Keramik nach einem der Ansprüche 15 bis 19, wobei die Massenanteile des Zinnoxids, des oder der Dotiermetalloxide und des B₂O₃ so sind, dass die Keramik einen Zinnoxid(e)anteil umfasst, der, massebezogen, größer oder gleich 90 %, bevorzugter größer oder gleich 95 %, noch bevorzugter größer oder gleich 99 % ist.

21. Keramik nach Anspruch 20, bei der die Massenanteile des Zinnoxids, des oder der Dotiermetalloxide so sind, dass sie ermöglichen, eine Keramik herzustellen, die als Ergänzung zu dem Zinnoxid und zu B₂O₃, um 100 % zu erreichen, ein oder mehrere der nachfolgenden Oxide mit den folgenden Massenanteilen umfasst :
• 0,1 bis 3 % Kobaltoxid,
• 0,01 bis 3 % Chromoxid,
• 0,01 bis 3 % Manganoxid,
• 0,01 bis 0,5 % Niobiumoxid,
• 0,01 bis 0,5 % Tantaloxid,
• 0,01 bis 0,5 % von einem (oder mehreren) Übergangsmetalloxid(en),
• 0,01 bis 0,5 % von einem (oder mehreren) Metalloxid(en) aus der Familie der Lanthanide wie zum Beispiel Lanthanoxid.

## Claims

1. The use of B₂O₃ in a semiconductive ceramic consisting of tin oxide SnO₂ as base metal oxide and of at least one dopant metal oxide, for decreasing the leakage current of said semiconductive ceramic.

2. The use according to claim 1, in which the semiconductive ceramic comprises 0.001% to 0.3% by weight, and preferably 0.08% to 0.15% by weight of B₂O₃.

3. The use according to any one of the preceding claims, in which the ceramic contains as dopant metal oxide(s) one or more oxide(s) selected from the oxides of: cobalt; manganese; niobium; transition metals, such as zinc; tantalum; and metals of the lanthanide family.

4. The use according to claim 3, in which the dopant metal(s) oxide(s) is/are selected from the oxides of cobalt, manganese, niobium, chromium, and tantalum.

5. The use according to claim 4, in which the ceramic contains as dopant metal oxides: cobalt oxide, chromium oxide, niobium oxide, and tantalum oxide.

6. The use according to any one of the preceding claims, in which the proportions by weight of the base metal oxide SnO₂, of the dopant metal oxide(s), and of B₂O₃ are such that the ceramic contains a base metal oxide SnO₂ content greater than or equal to 90% by weight, preferably greater than or equal to 95% by weight, and more preferably greater than or equal to 99% by weight.

7. The use according to claim 6, in which the proportions by weight of the base metal oxide SnO₂, and of the dopant metal oxide(s), are such as to make it possible to obtain a ceramic comprising, in addition to the base metal oxide SnO₂ and to the B₂O₃, and in order to make up 100%, one or more of the following oxides in the following percentages by weight:
▪ 0.1% to 3% cobalt oxide;
▪ 0.01% to 3% chromium oxide;
▪ 0.01% to 3% manganese oxide;
▪ 0.01% to 0.5% niobium oxide;
▪ 0.01% to 0.5% tantalum oxide;
▪ 0.01% to 0.5% of one or more transition metal oxides; and
▪ 0.01% to 0.5% of one or more oxides of metal from the lanthanide family, such as lanthanum oxide.

8. The use of B₂O₃ in a semiconductive ceramic consisting of tin oxide as metal base oxide, and of at least one dopant metal oxide, according to claim 1 for, further, stabilizing overtime the electrical properties under thermal stress and electrical stress of said ceramic.

9. The use according to claim 8, in which the semiconductive ceramic comprises 0.001% to 0.3% by weight, preferably 0.08% to 0.15% by weight of B₂O₃.

10. The use according to any one of claims 8 to 9, in which the ceramic contains, as dopant metal oxide(s), one or more oxide(s) selected from the oxides of: cobalt; manganese; niobium; transition metals such as zinc; tantalum; and metals of the lanthanide family.

11. The use according to claim 10, in which the dopant metal oxide(s) is/are selected from the oxides of cobalt, niobium, chromium, tantalum, and manganese.

12. The use according to any one of claims 8 to 11, in which the ceramic contains as dopant metal oxides: cobalt oxide, chromium oxide, niobium oxide, and tantalum oxide.

13. The use according to any one of claims 8 to 12, in which the proportions by weight of tin oxide, of the dopant metal oxide(s), and of B₂O₃, are such that the ceramic comprises tin oxide(s) at a proportion greater than or equal to 90% by weight, preferably greater than or equal to 95% by weight, more preferably greater than or equal to 99% by weight.

14. The use according to claim 13, in which the proportions by weight of tin oxide and of dopant metal oxide(s), are such that the ceramic comprises, in addition to the tin oxide and to B₂O₃, and in order to make up 100%, one or more of the following oxides in the following percentages by weight:
• 0.1% to 3% cobalt oxide;
• 0.01% to 3% chromium oxide;
• 0.01% to 3% manganese oxide;
• 0.01% to 0.5% niobium oxide;
• 0.01% to 0.5% tantalum oxide;
• 0.01% to 0.5% of one or more transition metal oxides; and
• 0.01% to 0.5% of one or more oxides of metal from the lanthanide family, such as lanthanum oxide.

15. A semiconductive ceramic consisting of tin oxide SnO₂ as base metal oxide, of at least one dopant metal oxide, and of B₂O₃.

16. A semiconductive ceramic according to claim 15, in which the B₂O₃ represents 0.001% to 0.30% by weight, and preferably 0.08% to 0.15% by weight of the ceramic.

17. A ceramic according to any one of claims 15 to 16, in which the ceramic contains, as dopant metal oxide(s), one or more oxide(s) selected from the oxides of cobalt; manganese; niobium; transition metals, such as zinc; tantalum; and metals of the lanthanide family.

18. A ceramic according to claim 17, in which the dopant metal oxide(s) is/are selected from the oxides of cobalt, niobium, chromium, tantalum, and manganese.

19. A ceramic according to claim 18, in which the ceramic contains as dopant metal oxides cobalt oxide, chromium oxide, niobium oxide and tantalum oxide.

20. A ceramic according to any one of claims 15 to 19, in which the proportion by weight of tin oxide, of the dopant metal oxide(s), and of B₂O₃, are such that the ceramic comprises a proportion of tin oxide(s) greater than or equal to 90% by weight, preferably greater than or equal to 95% by weight, more preferably greater than or equal to 99% by weight.

21. A ceramic according to claim 20, in which the proportions by weight of tin oxide, of the dopant metal oxide(s), are such that they make it possible to obtain a ceramic comprising in addition to the tin oxide and the B₂O₃, and in order to make up 100%, one or more of the following oxides in the following proportions by weight:
• 0.1% to 3% cobalt oxide;
• 0.01% to 3% chromium oxide;
• 0.01% to 3% manganese oxide;
• 0.01% to 0.5% niobium oxide;
• 0.01% to 0.5% tantalum oxide;
• 0.01% to 0.5% of one or more transition metal oxides; and
• 0.01% to 0.5% of one or more oxides of metal from the lanthanide family, such as lanthanum oxide.
